Europäisches Patentamt

European Patent Office

Office européen des brevets

(11) Publication number: **0 189 667**
**B1**

# EUROPEAN PATENT SPECIFICATION

(45) Date of publication of patent specification: **23.01.91**

(21) Application number: **85309315.1**

(22) Date of filing: **20.12.85**

(51) Int. Cl.⁵: **F 02 M 31/12, F 02 M 31/16, F 02 M 37/22**

(54) Method and apparatus for regenerative heating of diesel fuel.

(30) Priority: **28.12.84 US 687117**
**28.12.84 US 687120**

(43) Date of publication of application:
**06.08.86 Bulletin 86/32**

(45) Publication of the grant of the patent:
**23.01.91 Bulletin 91/04**

(84) Designated Contracting States:
**AT BE CH DE FR GB IT LI NL SE**

(56) References cited:
**EP-A-0 119 807**
**FR-A-2 564 147**
**US-A-4 091 265**
**US-A-4 372 260**

(73) Proprietor: RAYCHEM CORPORATION
(a Delaware corporation)
300 Constitution Drive
Menlo Park, California 94025 (US)

(72) Inventor: Leary, David F.
232 Glenwood Avenue
Woodside California 94062 (US)
Inventor: Olds, Richard N.
1551 Julie Lane
Los Altos California 94022 (US)

(74) Representative: Benson, John Everett et al
Raychem Limited
Intellectual Property Law Department
Faraday Road
Dorcan
Swindon, Wiltshire SN3 5HH (GB)

Courier Press, Leamington Spa, England.

## Description

This invention relates to the filtering and regenerative heating of diesel fuels as it passes from a fuel tank (or other fuel source) to a diesel engine.

If diesel fuel becomes too cold, higher molecular weight hydrocarbons therein can solidify, causing "clouding" of the fuel. These solids can block the pores of a fuel filter through which the fuel is pumped, causing the engine to lose power (or stop) or preventing the engine from starting. In order to prevent this, various methods have been proposed for heating diesel fuel before it reaches the filter. For disclosure of such methods, reference may be made, for example, to U.S. Patents Nos. 2,669,299, 3,564,199, 3,935,901, 3,989,019, 4,091,265, 4,372,279, 4,398,084, 4,406,785 and 4,529,866, and to EP—A—0068688 and EP—A—0074281.

The known systems for the electrical heating of diesel fuel suffer from the disadvantage that the output of the heater must be sufficient to heat all the diesel fuel passing through the fuel system from its storage temperature to a temperature above its cloud point. This is a particularly serious disadvantage when the heater is powered by the electrical system of a vehicle, which has only a limited amount of total power available. Typically, a heater having a power output of 100—150 watts is needed for a car or light truck, with proportionately larger power outputs needed for fuel systems handling larger fuel throughputs, e.g., 450—600 watts for a large truck. Equally important is the fact that the heater may continue to draw power at this rate for a considerable time, so that even if the vehicle batteries can provide the necessary power initially, they cannot continue to do so.

We have now realized that the outgoing diesel fuel (i.e., the fuel which has been filtered) need not be maintained above its cloud point after it has been filtered and that it is therefore possible to reduce the thermal output needed from the heater by passing the outgoing heated and filtered fuel in a regenerative heat-exchange relationship with the incoming fuel to preheat the incoming fuel. This creates a type of regenerative cycle in which low-grade heat that is not necessary after filtering and that would be lost is used to improve thermal efficiency. The present invention makes possible substantial reductions in the power output required of the heater under steady-state conditions, in order to produce a particular increase in the temperature of the fuel as it is filtered, for example a reduction of the power output to less than 25% of that required without any transfer of heat from the outgoing fuel to the incoming fuel as will be seen in the table disclosed later herein.

The purpose of the instant invention is to provide a method and apparatus for heating and filtering diesel fuel. To accomplish this purpose, incoming diesel fuel is passed in heat-exchange relationship with already heated and filtered fuel, the heat of the filtered fuel working in a regenerative fashion to reduce the amount of heat and therefore power required to heat the diesel fuel before filtering.

The present invention provides apparatus as described in claim 1.

Any type of electric heater can be used in this invention. It is preferable, however, to use a self-regulating heater, e.g. a heater comprising a PTC conductive polymer heating element such as an elongate strip heater comprising parallel wire electrodes embedded in a sheet or strip of conductive polymer comprising a cross-linked fluoropolymer having carbon black dispersed therein. The heater can be placed so that it is directly contacted by the diesel fuel outside a heating chamber, but is preferably placed inside the heating chamber, especially when a self-regulating heater is used. The heater can when the invention is used on a diesel-engined vehicle, as is preferred, be connected to the electrical system of the vehicle. Specific heaters are disclosed in U.S. Patents Nos. 3,564,199, 3,935,901, 3,989,019, 4,091,265, 4,177,376, 4,304,987, 4,372,260, 4,372,279 and 4,406,785 which are incorporated herein by reference.

The heat exchange between the incoming and outgoing fuel can be effected wholly or partly before the incoming fuel is heated by the heater. However, it is more efficient, i.e. uses less electrical power by recovering waste heat, to heat the incoming fuel by heat exchange with the outgoing fuel prior to heating by the heater. These functions can be performed within a common housing.

Attention is now directed to the drawings.

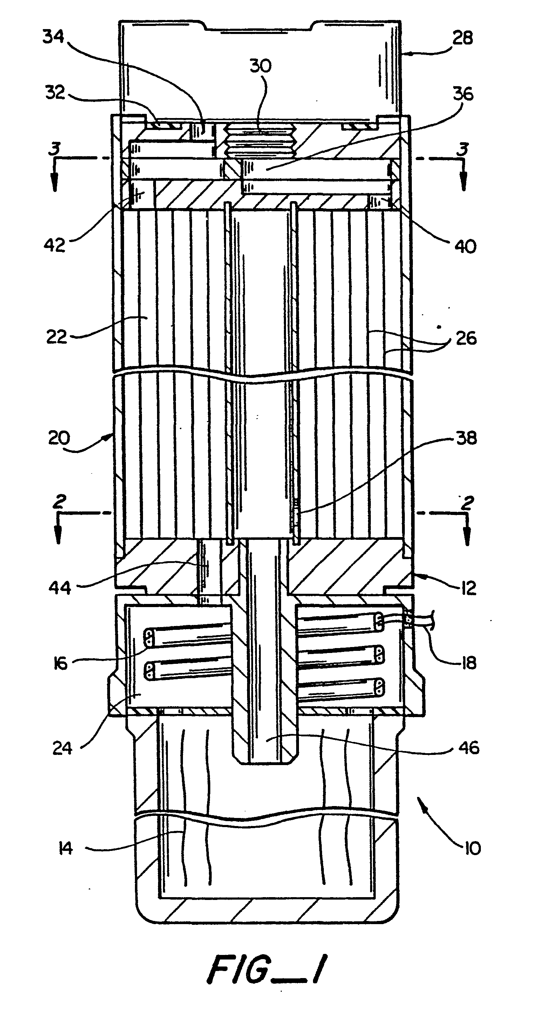

Figure 1 discloses apparatus shown generally at 10 for heating and filtering diesel fuel as it is pumped from a fuel source in which the fuel may be at a temperature below its cloud point. The apparatus comprises a housing shown generally at 12 for heating diesel fuel before it is filtered, and a filter 14. The apparatus utilizes an electrical heater 16 having means 18 for connecting the heater to a power supply (not shown). The housing comprises a heat-exchange means in the form of a heat-exchange chamber 22 and a heating chamber 24, the electrical heater 16 being within the heating chamber 24. The heat-exchange chamber 22 contains a heat-exchange member 26 which comprises a thermally conductive continuous double spiral partitions which maintains incoming fuel physically separate from outgoing heated and filtered fuel. Heat exchangers with double spiral partitions are also referred to as dual spiral plate heat exchangers.

The device 20 for heating diesel fuel before it is filtered and for transferring heat from the filtered diesel fuel to the diesel fuel to be heated and then filtered, is removably securable between a fuel manifold shown generally at 28 and a fuel filter 14. As seen in Fig. 1, the apparatus is removably secured by pipe threads 30 or the like, and is sealed with respect to the manifold by gasket means 32. The fuel filter 14 is likewise secured to the apparatus by threads (not shown) and a gasket or by other equivalent means. Incoming fuel to be heated and filtered is introduced into the apparatus at an inlet shown generally at 34 and exited at an outlet shown generally at 36. Heat-exchange chamber 22 has at least a first entry port 38 for the entry of filtered diesel fuel from the fuel filter 14 when the housing is secured to the fuel filter 14, and at least a first exit port 40 corresponding to the device and apparatus exit 36 for the exit of fuel to the fuel manifold 28 when the housing is secured to the fuel manifold. The first entry port 38 and the first exit port 40 define a first passage therebetween on one side of the heat-exchange member 26.

The heat-exchanger member has a second entry port 42 corresponding to the apparatus inlet 34 for entry of diesel fuel from the fuel manifold 28, and has a second exit port 44 for the exit of fuel to the heater chamber 24 having heater element 16. The second entry port 42 and the second exit port 44 define a second passage on the other side of said heat-exchange member 26. Heat from the first passage is capable of being thermally transferred to said second passage through said heat-exchange member 26 to warm the incoming fuel before it passes into the heating chamber 24 and before it then passes into the filter 14. Separation of first and second passages can be more clearly seen in Fig. 2 wherein the second passage terminating at second exit port 44 is traced in phantom line for purpose of illustration.

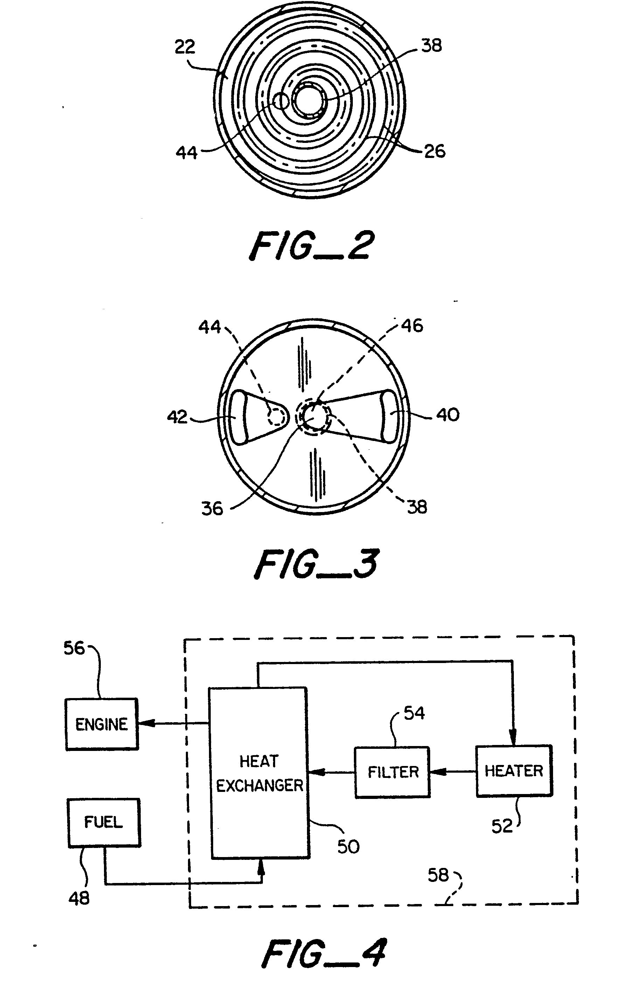

Figs. 2 and 3 are sectional views taken with respect to Fig. 1. By a comparison of these figures it can be seen, for example in Fig. 3, that fuel entering via inlet 34 and second entry port 42 at the top of the device will be kept separate by heat-exchange member 26 from exiting fuel as it travels around the spiral path, eventually to exit through second exit port 44 (also shown in phantom in Fig. 3) into the heater section 16. Likewise it can be seen that fuel returning from filter 14 through center core 46 will re-enter the heat-exchange section through first entry port 38 and proceed through the spiral pathway to exit at first exit port 40. It is understood that the heat-exchange member 26 completely separates the two first and second fuel passages as described above from each other. The unique spiral configuration provides an extremely large surface area of contact in a compact cylindrical envelope.

Fig. 4 is a schematic view of the instant invention wherein incoming diesel fuel 48 is passed through a heat exchanger 50 in heat-exchange relationship with outgoing filtered fuel and is preheated and then proceeds to heater 52 for further heating such as by means of an electrical heater before being passed through filter 54. The heated and now filtered fuel passes from the filter 54 in regenerative heat-exchange relationship back through the heat exchanger 50 by a separate and distinct path for use in the engine 56. The apparatus of the instant invention is shown contained within the dashed line 58.

Other types of heat exchangers such as a tube and shell heat-exchanger, double-pipe heat-exchangers and parallel plate heat-exchangers can be used.

Heater 52 may be any one of a number of heating devices which are capable of raising the temperature of the fuel placed in contact with the heater. An example is the coiled PTC heater disclosed in commonly-assigned U.S. Patent Application Serial Nos. 474,390, filed March 11, 1983, and 606,033, filed May 1, 1984, which are incorporated by reference herein. Other types of heaters may be used such as electrical resistance wires, barium titanate PTC resistors, mineral insulated cable and self-regulating heaters as described in U.S. Patent No. 4,177,376 referred to earlier.

A device as shown in Fig. 1 and functioning per the diagram of Fig. 4 was connected to a variable flow rate diesel fuel pump and reservoir system and a source of direct current electrical power.

The results obtained are shown in the Table below. It can be seen that in the case of a 2.273 litres per-minute (0.5 gallon-per-minute) flow rate a reduction of the power output to 24% of that necessary to produce an equivalent fuel temperature rise at the filter inlet without any transfer of heat from the outgoing fuel to the incoming fuel was achieved by the regenerative heat exchanger. In the case of a higher fuel flow rate of 3.091 litres-per-minute (0.68 gallons-per-minute) a reduction of power output to 17% of that necessary to produce an equivalent temperature rise at the fuel filter inlet without any transfer of heat from the outgoing fuel to the incoming fuel was achieved by the regenerative heat exchanger.

TABLE

| Flow rate | Fuel inlet | Total ΔT | Heater ΔT | Exchanger ΔT | ΔT % Total from exchanger | ΔT % Total from heater | % Improvement over heater alone | Actual heater | | | Equivalent heater watts for same effect |
|---|---|---|---|---|---|---|---|---|---|---|---|
| | | | | | | | | Volts | Amps | Watts | |
| LPM (GPM) | °C (°F) | °C (°F) | °C (°F) | °C (°F) | | | | | | | |
| 2.273 (0.5) | −12.78 (9) | 25.0 (45) | 6.0 (10.8) | 19.0 (34.2) | 76% | 24% | 318% | 14 | 14.7 | 205.8 | 860 |
| 3.091 (0.68) | −7.78 (18) | 17.8 (32) | 3.1 (5.5) | 14.7 (26.5) | 83% | 17% | 482% | 14 | 16 | 224 | 1300 |

EP 0 189 667 B1

The apparatus can be configured so that the heat-exchange chamber and the heating chamber are integral. Such an integral unit and the fuel filter can be removably securable to each other and in turn removably securable to a fuel manifold. In practice, this invention can be used either with spin-on filters or replaceable element filters. In an integral heater and heat-exchange unit, a cavity for a replaceable filter element with appropriate fuel passages may be included. In a preferred embodiment, the heating chamber and the heat-exchange chamber form part of an integral unit which can be secured between the fuel manifold and the filter of a conventional vehicle fuel system, so that the integral unit can be retrofitted to the conventional system with little difficulty. In another embodiment of this invention, a water separator may also be incorporated into the apparatus either anywhere prior to the filter, as part of the filter, or anywhere after the filter.

**Claims**

1. Apparatus for heating and filtering diesel fuel as it is pumped from a fuel source in which the fuel is at a temperature below its cloud point, the apparatus comprising an electric heater (16) to heat the fuel, the heater (16) being connectable to a fuel filter (14), the apparatus being characterised by a heat exchanger (22, 26) connected to the heater (16), the heat exchanger comprising (i) a chamber (22) enlarged with respect to its inlet and outlet passages, the chamber (22) having a first passageway (38, 40) therethrough for conducting outgoing fuel that has been heated by the heater (16) and filtered by the filter (14), and a second passageway (42, 44) therethrough for conducting incoming fuel from the fuel source to the heater (16), and (ii) heat exchange members (26) arranged to transfer heat from the heated outgoing filtered fuel in the second passageway to the incoming fuel in the first passageway before the incoming fuel enters the heater (16), thereby allowing a reduction in the power output required of the heater (16) under steady state conditions.

2. Apparatus according to Claim 1 wherein the heater (16) is a self-regulating heater.

3. Apparatus according to Claim 1 or 2, comprising a fuel filter (14) connected to said heater (16) and said heat-exchanger (22, 24, 26).

4. Apparatus according to Claim 3 wherein the heater (16), heat-exchanger (22, 24, 26) and fuel filter (14) are enclosed within a common housing (12).

5. Apparatus according to Claim 3 or 4, comprising a water separator operatively connected to the fuel filter (14) to separate water from the fuel.

6. Apparatus according to Claim 5 wherein the heater, heat-exchanger, the fuel filter and the water separator are enclosed within a common housing.

7. Apparatus according to any preceding claim, wherein the heat-exchanger (26) comprises a dual spiral plate heat exchanger, or a tube and shell heat exchanger, or a double pipe heat exchanger, or a parallel plate heat exchanger.

8. Apparatus according to any preceding claim wherein the heat exchanger (22, 24, 26) is arranged such that the power output of the heater (16) can be reduced to less than 25% of that required without any transfer of heat from the outgoing fuel to the incoming fuel.

9. Apparatus according to any one of the preceeding claims wherein the heater (16) comprises a PTC conductive polymer heating element.

**Patentansprüche**

1. Vorrichtung zum Erwärmen und Filtern von Dieselkraftstoff, während dieser aus einer Kraftstoffquelle gepumpt wird, in der der Kraftstoff eine Temperatur unter seinem Trübungspunkt hat, wobei die Vorrichtung eine elektrische Heizung (16) aufweist, um den Kraftstoff zu erwärmen, und wobei die Heizung (16) an einen Kraftstoff-Filter (14) anschließbar ist, gekennzeichnet durch einen Wärmetauscher (22, 26), der an die Heizung (16) angeschlossen ist, wobei der Wärmetauscher folgendes aufweist:

(i) eine Kammer (22), die bezüglich ihrer Einlaß- und Auslaßkanäle vergrößert ist, wobei die Kammer (22) einen ersten, sie durchsetzenden Durchlaß (38, 40) zur Führung von austretendem Kraftstoff, der von der Heizung (16) erwärmt und von dem Filter (14) gefiltert worden ist, und einen zweiten, sie durchsetzenden Durchlaß (42, 44) zur Führung von eintretendem Kraftstoff aufweist, der von der Kraftstoffquelle zur Heizung (16) fließt, und

(ii) Wärmetauscherelemente (26), die so angeordnet sind, daß sie Wärme von dem austretenden gefilterten Kraftstoff in dem zweiten Durchlaß auf den eintretenden Kraftstoff in dem ersten Durchlaß übertragen, bevor der eintretende Kraftstoff in die Heizung (16) eintritt, so daß eine Verringerung der von der Heizung (16) im stationären Zustand erforderlichen Ausgangsleistung ermöglicht wird.

2. Vorrichtung nach Anspruch 1, wobei die Heizung (16) eine selbstregelnde Heizung ist.

3. Vorrichtung nach Anspruch 1 oder 2, umfassend einen Kraftstoff-Filter (14), der mit der Heizung (16) und dem Wärmetauscher (22, 24, 26) verbunden ist.

4. Vorrichtung nach Anspruch 3, wobei die Heizung (16), der Wärmetauscher (22, 24, 26) und der Kraftstoff-Filter (14) in einem gemeinsamen Gehäuse (12) eingeschlossen sind.

5. Vorrichtung nach Anspruch 3 oder 4, umfassend einen Wasserabscheider, der betriebsmäßig mit dem Kraftstoff-Filter (14) verbunden ist, um Wasser aus dem Kraftstoff abzuscheiden.

6. Vorrichtung nach Anspruch 5, wobei die Heizung, der Wärmetauscher, der Kraftstoff-Filter und der Wasserabscheider in einem gemeinsamen Gehäuse eingeschlossen sind.

7. Vorrichtung nach einem der vorhergehenden Ansprüche, wobei der Wärmetauscher (26) einen Doppelspiralplattenwärmetauscher oder einen Rohrbündelwärmetauscher oder einen Doppelrohrwärmetauscher oder einen Parallelplattenwärmetauscher aufweist.

8. Vorrichtung nach einem der vorhergehenden Ansprüche, wobei der Wärmetauscher (22, 24, 26) so angeordnet ist, daß die Ausgangsleistung der Heizeinrichtung (16) auf weniger als 25% der Ausgangsleistung reduzierbar ist, die ohne Wärmeübertragung von dem austretenden Kraftstoff auf den eintretenden Kraftstoff erforderlich ist.

9. Vorrichtung nach einem der vorhergehenden Ansprüche, wobei die Heizung (16) ein leitfähiges Polymerheizelement vom PTC-Typ aufweist.

## Revendications

1. Appareil pour le réchauffement et la filtration d'un carburant Diesel lors de son pompage d'une source de carburant dans laquelle le carburant est à une température inférieure à son point de trouble, l'appareil comprenant un appareil de chauffage électrique (16) destiné à réchauffer le carburant, l'appareil de chauffage (16) pouvant être relié à un filtre à carburant (14), l'appareil étant caractérisé en ce qu'il comprend un échangeur de chaleur (22, 26) relié à l'appareil de chauffage (16), l'échangeur de chaleur comprenant (i) une chambre (22) agrandie par rapport à ses passages d'admission et de sortie, la chambre (22) comprenant un premier passage (38, 40) à travers cette chambre pour véhiculer le carburant de sortie qui a été réchauffé par l'appareil de chauffage (16) et filtré par le filtre (14), et un second passage (42, 44) à travers cette chambre pour véhiculer le carburant d'entrée de la source de carburant à l'appareil de chauffage (16), et (ii) des éléments d'échange de chaleur (26) disposés de manière à transférer la chaleur du carburant réchauffé et filtré de sortie dans le second passage au carburant d'entrée dans le premier passage avant que le carburant d'entrée ne pénètre dans l'appareil de chauffage (16), ce qui permet ainsi de réduire la puissance utile requise de l'appareil de chauffage (16) dans des conditions de régime constant.

2. Appareil suivant la revendication 1, dans lequel l'appareil de chauffage (16) est un appareil de chauffage à autorégulation.

3. Appareil suivant la revendication 1 ou 2, comprenant un filtre à carburant (14) relié à l'appareil de chauffage (16) et à l'échangeur de chaleur (22, 24, 26).

4. Appareil suivant la revendication 3, dans lequel l'appareil de chauffage (16), l'échangeur de chaleur (22, 24, 26) et le filtre à carburant (14) sont enfermés dans un boîtier commun (12).

5. Appareil suivant la revendication 3 ou 4, comprenant un séparateur d'eau relié fonctionnellement au filtre à carburant (14) pour séparer l'eau du carburant.

6. Appareil suivant la revendication 5, dans lequel l'appareil de chauffage, l'échangeur de chaleur, le filtre à carburant et le séparateur d'eau sont enfermés dans un boîtier commun.

7. Appareil suivant l'une quelconque des revendications précédentes, dans lequel l'échangeur de chaleur (26) consiste en un échangeur de chaleur à plaques en double spirale, un échangeur de chaleur à tubes et enveloppes, un échangeur de chaleur à doubles conduits ou un échangeur de chaleur à plaques parallèles.

8. Appareil suivant l'une quelconque des revendications précédentes, dans lequel l'échangeur de chaleur (22, 24, 26) est disposé de sorte que la puissance utile de l'appareil de chauffage (16) puisse être réduite à moins de 25% de celle requise sans un quelconque transfert de chaleur du carburant de sortie au carburant d'entrée.

9. Appareil suivant l'une quelconque des revendications précédentes, dans lequel l'appareil de chauffage (16) comprend un élément chauffant constitué d'un polymère conducteur CTP.

FIG__1

## FIG_2

## FIG_3

## FIG_4